# EUROPÄISCHE PATENTSCHRIFT

(11) **EP 2 507 656 B1**
(45) Veröffentlichungstag und Bekanntmachung des Hinweises auf die Patenterteilung: **28.08.2019**
(21) Anmeldenummer: 10792825.1
(22) Anmeldetag: 03.12.2010
(51) Int. Cl.: G02B 5/18, G02B 5/28

(54) **SICHERHEITSELEMENT MIT FARBFILTER, WERTDOKUMENT MIT SO EINEM SOLCHEN SICHERHEITSELEMENT SOWIE HERSTELLUNGSVERFAHREN EINES SOLCHEN SICHERHEITSELEMENTES**
SECURITY ELEMENT HAVING A COLOR FILTER, DOCUMENT OF VALUE HAVING SUCH A SECURITY ELEMENT AND PRODUCTION METHOD FOR SUCH A SECURITY ELEMENT
ELÉMENT DE SÉCURITÉ AVEC FILTRE COLORÉ, DOCUMENT DE VALEUR COMPORTANT UN TEL ÉLÉMENT DE SÉCURITÉ ET PROCÉDÉ DE FABRICATION D'UN TEL ÉLÉMENT DE SÉCURITÉ

(30) Priorität: 04.12.2009 DE 102009056933
(43) Veröffentlichungstag der Anmeldung: 10.10.2012
(73) Patentinhaber: Giesecke+Devrient Currency Technology GmbH, 81677 München (DE)
(72) Erfinder: LOCHBIHLER, Hans, 80333 München (DE)
(86) Internationale Anmeldenummer: PCT/EP2010/007370
(87) Internationale Veröffentlichungsnummer: WO 2011/066992

(56) Entgegenhaltungen:
- EP-A1- 1 180 711
- EP-A1- 1 775 142
- DE-A1- 10 308 305
- DE-A1-102005 021 514
- US-A- 5 007 708
- US-A1- 2006 001 969
- US-A1- 2007 263 285

## Beschreibung

Die Erfindung betrifft ein Sicherheitselement mit einem Farbfilter, ein Wertdokument mit einem solchen Sicherheitselement sowie ein Herstellungsverfahren eines solchen Sicherheitselementes.

Zu schützende Gegenstände werden häufig mit einem Sicherheitselement ausgestattet, dass eine Überprüfung der Echtheit des Gegenstandes erlaubt und zugleich als Schutz vor unerlaubter Reproduktion dient.

Zu schützende Gegenstände sind beispielsweise Sicherheitspapiere, Ausweis- und Wertdokumente (wie z.B. Banknoten, Chipkarten, Pässe, Identifikationskarten, Ausweiskarten, Aktien, Anleihen, Urkunden, Gutscheine, Schecks, Eintrittskarten, Kreditkarten, Gesundheitskarten, etc.) sowie Produktsicherungselemente, wie z.B. Etiketten, Siegel, Verpackungen, etc.

Für solche Sicherheitselemente sind unterschiedliche Strukturen bekannt, um farbbeeinflussende Wirkung zu erzielen. So können Interferenzfilter, dünne semitransparente Metallschichten mit selektiver Transmission durch Plasmaresonanzeffekte, Nanopartikel, mikroperforierte Metallfolien und Drahtgitter, photonische Kristalle, metallische Gitter unter Anregung von Oberflächenplasmon-Polaritonen, Drahtgitter unter Ausnutzung der Resonanz in TE-Polarisation und metallisch schräg bedampfte Subwellenlängengitter, sogenannte Z-Gitter verwendet werden.

Die Erzeugung von feinstrukturierten mehrfarbigen Motiven ist bisher jedoch nur für die Z-Gitter bekannt. Hierzu ist es notwendig, mindestens einen Strukturparameter lateral innerhalb des Motivbereiches zu variieren, um so an den Sollpositionen die gewünschte Farbe zu erzeugen. Die Farberzeugung durch Z-Gitter eignet sich gut in Transmission. In Reflexion ist der Farbkontrast jedoch nur wenig ausgeprägt und es kann nur ein relativ kleiner Bereich des Farbraums wiedergegeben werden.

US 2006/0001969 A1 zeigt einen doppelbrechenden Artikel umfassend eine - mit einer Periode aus dem Bereich von 100 nm bis 2000 nm - modulierte Oberfläche, auf der zwei oder mehr Schichten mit Schichtdicken von 50 bis 1000 nm liegen können. DE 10 2005 021514 A1 zeigt ein Sicherheitselement, mit einer münzmetallfarbenen Beschichtung, welche durch eine Schichtenfolge mit einer Reflektorschicht, einer dielektrischen Abstandsschicht und einer dünnen farbigen Metallschicht gebildet ist. Eine dielektrische Zero-Order-Gitterstruktur wird in US 2007/0263285 A1 mit einer zweiten dielektrischen Gitterstruktur und in EP 1 775 142 A1 mit einer Reflektionsschicht kombiniert.

Ausgehend hiervon ist es Aufgabe der Erfindung, ein Sicherheitselement mit einem Farbfilter vorzusehen, mit dem ein möglichst großer Bereich des Farbraums abgedeckt werden kann und das sowohl für Reflexion als auch Transmission geeignet ist.

Erfindungsgemäß wird die Aufgabe gelöst durch den Gegenstand der unabhängigen Ansprüche. Die abhängigen Ansprüche betreffen bevorzugte Ausgestaltungen.

Ein Sicherheitselement für Sicherheitspapiere, Wertdokumente oder dergleichen, umfasst einen Träger, dessen Oberseite höhenmoduliert ist, und eine als Farbfilter wirkende Mehrschichtstruktur, die auf der höhenmodulierten Oberseite ausgebildet und dadurch ebenfalls höhenmoduliert ist und die eine erste Schicht, eine darauf gebildete zweite Schicht aus dielektrischem Material sowie eine auf der zweiten Schicht ausgebildete dritte Schicht umfasst, wobei die erste und dritte Schicht jeweils aus einem metallischen Material oder jeweils aus einem Halbmetall ausgebildet sind.

Mit einem solchen Sicherheitselement sind sowohl in Reflexion als auch in Transmission gute Ergebnisse erzielbar. Insbesondere kann ein relativ großer Farbraum abgedeckt werden.

Als metallisches Material können Metalle, wie z.B. Aluminium, Gold, Silber, Kupfer, Palladium, Chrom, Nickel und/oder Wolfram sowie deren Legierungen eingesetzt werden. Als dielektrisches Material kann z.B. ZnS, SiO₂, TiO₂ oder MgF₂ verwendet werden. Als Halbmetall kann z.B. Silicium oder Germanium verwendet werden. Der Träger kann einen strahlungshärtenden Lack (beispielsweise ein UV-Lack) aufweisen, dessen Oberseite höhenmoduliert ist. Der Lack kann auf einer transparenten Trägerfolie (beispielsweise einer PET-Folie) vorliegen. Insbesondere kann der Träger ein UV-härtendes anorganisch-organisches Hybridpolymer umfassen, das beispielsweise unter dem Markennamen Ormocer vertrieben wird.

Bei dem erfindungsgemäßen Sicherheitselement kann die Höhenmodulation der Oberseite sowie der Mehrschichtstruktur in einer ersten Richtung periodisch sein. Es ist auch möglich, dass die Höhenmodulation zusätzlich noch in einer zweiten Richtung periodisch ist. So können beispielsweise zylinderförmige Vertiefungen periodisch in zwei Dimensionen vorliegen (ähnlich einer Lochstruktur). Insbesondere ist die Gitterperiode kleiner als die größte Wellenlänge des Bereiches der elektromagnetischen Strahlung, für den das Sicherheitselement ausgelegt ist. Hierbei ist der Brechungsindex des umgebenden Materials zu berücksichtigen, der für die oben erwähnten Lacke und Folien zwischen 1,4 und 1,75 liegt. Bevorzugt ist das Sicherheitselement für sichtbares Licht ausgelegt, so dass die Gitterperiode bevorzugt kleiner als 400 nm ist. So kann die Gitterperiode beispielsweise 330 nm betragen.

Das Gitterprofil ist bevorzugt rechteckig. Das Gitterprofil kann aber auch Abweichungen von der Rechteckform aufweisen, d.h. Rechteck-ähnlich sein. Zum Beispiel kann das Gitterprofil in Trapez-Form oder in Form eines Rechtecks mit einem abgerundeten Plateau vorliegen oder eine Sinusform annehmen.

Ein Gitterprofil in Rechteckform lässt sich besonders leicht herstellen.

Die Modulationstiefe der höhenmodulierten Mehrschichtstruktur kann lateral variiert werden. Dadurch können unterschiedliche Farben (in Reflexion und/oder Transmission) eingestellt werden. Ferner kann zur Einstellung gewünschter Farben auch die Gitterperiode und/ oder das Gitterprofil lateral variiert sein.

Des Weiteren ist es möglich, in der zweiten Schicht metallische Nanopartikel einzubringen, um gewünschte Farbeffekte zu erreichen. Durch eine laterale Variation der Verteilung der Nanopartikel kann wiederum die Farbfilterwirkung lateral variiert werden.

Auch die Modulationstiefe der höhenmodulierten Mehrschichtstruktur kann lateral variiert werden, um die Farbfilterwirkung zu beeinflussen.

Ferner kann auch die Schichtdicke der zweiten Schicht lateral variiert werden, um die Farbwirkung bestimmungsgemäß zu variieren.

Die Schichtdicken der ersten und dritten Schicht können gleich sein. Es ist jedoch auch möglich, dass die Schichtdicken der ersten und dritten Schicht verschieden sind. Ferner können für die erste und dritte Schicht jeweils das gleiche Material oder auch unterschiedliche Materialien eingesetzt werden.

Die Modulationstiefe kann insbesondere auch so variiert werden, dass Abschnitte der ersten Schicht und Abschnitte der dritten Schicht eine durchgehende Schicht bilden. In diesem Fall können besonders gute Farbfilterwirkungen erreicht werden. Insbesondere können die Abmessungen so gewählt werden, dass Resonanzen im sichtbaren Wellenlängenbereich auftreten.

Ferner wurde festgestellt, dass das erfindungsgemäße Sicherheitselement mit seiner Mehrschichtstruktur polarisationsabhängige Farbfilterwirkungen aufweist. Die Mehrschichtstruktur kann somit so ausgebildet werden, dass sie eine polarisationsabhängige Farbfilterwirkung aufweist. Dies kann zu weiteren Echtheitsprüfungen eingesetzt werden. So können mittels einer polarisierten Beleuchtung und/oder durch Betrachtung durch einen Polarisator unterschiedliche Farbfiltereffekte erreicht werden.

Das erfindungsgemäße Sicherheitselement ist bevorzugt so ausgebildet, dass die Mehrschichtstruktur, in Draufsicht gesehen, zusammenhängend ist. Dies gilt auch für die einzelnen Schichten des Sicherheitselementes. Das Sicherheitselement kann somit, im Querschnitt gesehen, erste und zweite Abschnitte, die jeweils aus der ersten, zweiten und dritten Schicht aufgebaut sind, aufweisen, die zueinander in Höhenrichtung versetzt angeordnet sind.

Das erfindungsgemäße Sicherheitselement kann mehr als drei Schichten aufweisen. Insbesondere ist die Schichtanzahl ungeradzahlig und wird im Vergleich zu dem Dreischicht-Aufbau um n mal mit einer vierten und fünften Schicht ergänzt, wobei n eine ganze Zahl größer als null ist. Die vierte Schicht ist eine dielektrische Schicht und die fünfte Schicht ist in gleicher Weise wie die erste und dritte Schicht eine metallische Schicht oder eine halbmetallische Schicht. Bevorzugt ist ein Fünfschicht-Aufbau, mit dem auch Farben dargestellt werden können, die außerhalb des herkömmlichen Farbdreiecks liegen.

Natürlich ist es möglich, dass das Sicherheitselement abschnittsweise eine erste Mehrschichtstruktur mit drei Schichten und eine zweite Mehrschichtstruktur mit mehr als drei Schichten (beispielsweise fünf Schichten) aufweist, um dadurch lokal unterschiedliche Farben zu erzeugen. Es können somit auch die Anzahl der Schichten lateral variiert werden, um die gewünschten Farben bei Reflexion und/oder Transmission zu erzeugen.

Das erfindungsgemäße Sicherheitselement kann als reflektiver und/oder transmissiver Farbfilter ausgebildet sein.

Ferner wird ein Wertdokument mit dem erfindungsgemäßen Sicherheitselement bereitgestellt.

Das erfindungsgemäße Wertdokument kann einen Polarisator aufweisen. Dieser kann beispielsweise zur Betrachtung des Sicherheitselementes bei einem anderen Wertdokument verwendet werden. Ferner kann der Polarisator so in das Wertdokument relativ zum Sicherheitselement integriert sein, dass beispielsweise durch Biegen, Knicken oder Falten des Wertdokumentes der Polarisator so vor dem Sicherheitselement des Wertdokumentes positioniert werden kann, dass das Sicherheitselement durch den Polarisator betrachtet werden kann.

Des weiteren wird ein Herstellungsverfahren eines Sicherheitselementes für Sicherheitspapiere, Wertdokumente oder dergleichen bereitgestellt, bei dem die Oberseite eines Trägers höhenmoduliert wird, auf die höhenmodulierte Oberseite in dieser Reihenfolge eine erste Schicht, eine zweite Schicht aus dielektrischem Material und eine dritte Schicht als Mehrschichtstruktur aufgebracht wird, die dadurch ebenfalls höhenmoduliert ist, wobei für die erste und dritte Schicht jeweils ein metallisches Material oder jeweils ein halbmetallisches Material verwendet wird.

Das erfindungsgemäße Herstellungsverfahren kann insbesondere so weitergebildet werden, dass das erfindungsgemäße Sicherheitselement sowie die Weiterbildung des erfindungsgemäßen Sicherheitselementes hergestellt werden können.

Zur Erzeugung der höhenmodulierten Oberseite des Trägers können bekannte Mikrostrukturierungsverfahren eingesetzt werden, wie z.B. Prägeverfahren. Die Originalstruktur kann beispielsweise mit aus der Halbleiterfertigung bekannten Verfahren (Fotolithographie, Elektronenstrahllithographie, Laserlithographie, etc.) durch eine Graustufenbelichtung und durch einem anschließenden Ätzvorgang auf einem Substrat, das mit einem Resistmaterial überzogen ist, erzeugt werden. Davon wird das Prägewerkzeug durch galvanische Abformung bzw. durch ein Nanoimprintverfahren z.B. in ETFE oder in einem anorganisch-organischen Hybridpolymer erzeugt. Solche Prägewerkzeuge können aber auch direkt in ein Substrat durch Laserablation bzw. ultrakurze Laserpulse geschrieben werden.

Besonders geeignet zur Herstellung großer Flächen sind die bekannten Verfahren zur Prägung in thermoplastischen Folien oder in mit strahlungshärtenden Lacken beschichteten Folien.

Der Träger kann eine Schicht oder mehrere Schichten aufweisen, die sukzessiv aufgebracht und gegebenenfalls strukturiert werden und/oder kann aus mehreren Teilen zusammengesetzt werden.

Das Sicherheitselement kann insbesondere als Sicherheitsfaden, Aufreißfaden, Sicherheitsband, Sicherheitsstreifen, Patch oder als Etikett zum Aufbringen auf ein Sicherheitspapier, Wertdokument oder dgl. ausgebildet sein. Insbesondere kann das Sicherheitselement transparente Bereiche oder Ausnehmungen überspannen.

Unter dem Begriff Sicherheitspapier wird hier insbesondere die noch nicht umlauffähige Vorstufe zu einem Wertdokument verstanden, die neben dem erfindungsgemäßen Sicherheitselement beispielsweise auch weitere Echtheitsmerkmale (wie z.B. im Volumen vorgesehene Lumineszenzstoffe) aufweisen kann. Unter Wertdokumenten werden hier einerseits aus Sicherheitspapieren hergestellte Dokumente verstanden. Andererseits können Wertdokumente auch sonstige Dokumente und Gegenstände sein, die mit dem erfindungsgemäßen Sicherheitselement versehen werden können, damit die Wertdokumente nicht kopierbare Echtheitsmerkmale aufweisen, wodurch eine Echtheitsprüfung möglich ist und zugleich unerwünschtes Kopieren verhindert wird.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Zeichnungen, die auch erfindungswesentliche Merkmale offenbaren, noch näher erläutert. Es zeigen:
- Fig. 1: eine Draufsicht einer Banknote mit einem erfindungsgemäßen Sicherheitselement;
- Fig. 2: einen vergrößerten Abschnitt eines Teils des Schnitts entlang der Linie A-A in Fig.1, der jedoch nicht die erfindungsgemäße Modulationstiefe aufweist;
- Fig. 3-7: verschiedene Schnittansichten zur Erläuterung der Herstellung des Sicherheitselements 1 gemäß Figur 2;
- Fig. 8a-8c: verschiedene Darstellungen zur Erläuterung der reflektiven Farbfilterwirkung des Sicherheitselementes 1 gemäß Figur 2;
- Fig. 9a-9c: verschiedene Darstellungen zur Erläuterung der transmissiven Farbfilterwirkung des Sicherheitselementes gemäß Figur 2;
- Fig. 10a-10c: verschiedene Darstellungen zur Erläuterung der reflektiven Farbfilterwirkung eines weiteren Sicherheitselementes;
- Fig. 11a-11c: verschiedene Darstellungen zur Erläuterung der transmissiven Farbfilterwirkung des weiteren Sicherheitselementes;
- Fig. 12a-12c: verschiedene Darstellungen zur Erläuterung der reflektiven Farbfilterwirkung eines Sicherheitselementes einer noch weiteren Ausführungsform;
- Fig. 13a-13c: verschiedene Darstellungen zur Erläuterung der transmissiven Farbfilterwirkung eines Sicherheitselementes der noch weiteren Ausführungsform;
- Fig. 14 und 15: das Sicherheitselement gemäß Figur 2 mit erfindungsgemäßen Modulationstiefen;
- Fig. 16: Reflexionsspektren des Sicherheitselementes gemäß Variante 1;
- Fig. 17: Transmissionsspektren des Sicherheitselementes gemäß Variante 1;
- Fig. 18: Reflexionsspektren des Sicherheitselementes gemäß Variante 2;
- Fig. 19: Transmissionsspektren des Sicherheitselementes gemäß Variante 2;
- Fig. 20: Reflexionsspektren des Sicherheitselementes gemäß Variante 3;
- Fig. 21: Transmissionsspektren des Sicherheitselementes gemäß Variante 3;
- Fig. 22: eine Darstellung zur Erläuterung der Winkelabhängigkeit der Farben bei Reflexion des Sicherheitselementes gemäß Variante 1;
- Fig. 23: eine Darstellung der Winkelabhängigkeit der Farben bei Reflexion des Sicherheitselementes gemäß Variante 2;
- Fig. 24a-24c: Darstellung zur Erläuterung der Farbfilterwirkung bei Reflexion des Sicherheitselementes gemäß Variante 3 für unterschiedliche Einfallswinkel;
- Fig. 25a-25c: Darstellung zur Erläuterung der polarisationsabhängigen Farbfilterwirkung bei Reflexion des Sicherheitselementes gemäß Variante 3;
- Fig. 26a-26c: Darstellung zur Erläuterung der polarisationsabhängigen Farbfiltereffekte bei Transmission des Sicherheitselementes gemäß Variante 3;
- Fig. 27 - 30: Darstellungen einer Ausführungsform des Sicherheitselementes mit einer Mehrschichtstruktur aus fünf Schichten mit unterschiedlichen Modulationstiefen;
- Fig. 31a-31c: verschiedene Darstellungen zur Erläuterung des Reflexionsverhaltens eines Sicherheitselementes mit einer Mehrschichtstruktur mit fünf Schichten, und
- Fig. 32: eine Darstellung der reflektiven Filterwirkung eines Sicherheitselementes mit einer rein dielektrischen Mehrschichtstruktur mit fünf Schichten.

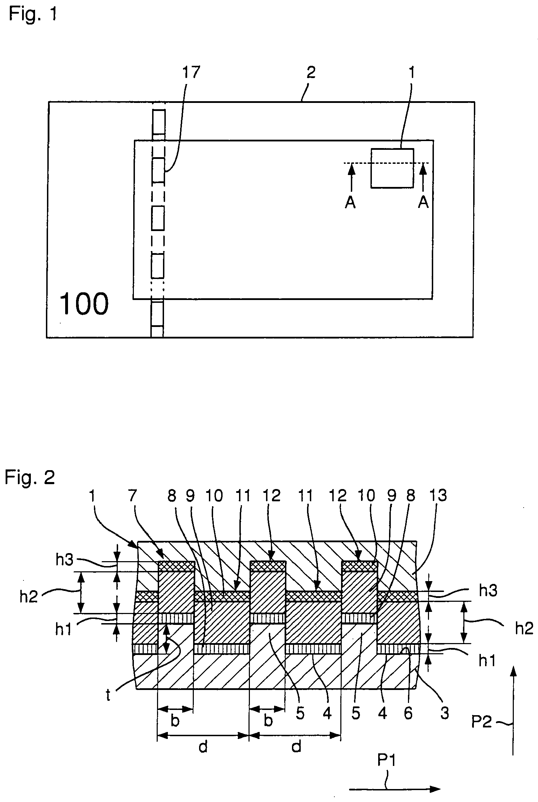

Bei der in Figur 1 gezeigten Ausführungsform ist das erfindungsgemäße Sicherheitselement 1 so in einer Banknote 2 integriert, dass das Sicherheitselement 1 von der in Figur 1 gezeigten Vorderseite der Banknote 2 als auch von der Rückseite der Banknote 2 sichtbar ist.

Wie in der Schnittdarstellung in der nicht unter die Erfindung fallenden Figur 2 zu entnehmen ist, die vergrößert einen Teil des Sicherheitselementes 1 entlang der Schnittlinie A-A von Figur 1 zeigt, umfasst das Sicherheitselement 1 einen Träger 3, in dessen Oberseite 6 in einer ersten Richtung P1 periodisch angeordnete Gräben 4 mit einer Grabentiefe t ausgebildet sind. Die Gräben 4 sind jeweils um den Abstand b (hier b = 130 nm) voneinander beabstandet, so dass zwischen den Gräben 4 jeweils ein Steg 5 vorhanden ist. Die gesamte Ausdehnung eines Grabens 4 und eines Stegs 5 in der ersten Richtung P1 beträgt d (hier d = 330 nm).

Die Darstellung in Figur 2 sowie in den nachfolgenden Figuren ist nicht maßstabsgetreu, sondern gemäß der besseren Darstellbarkeit entsprechend gewählt.

Die Oberseite des Trägers 3 ist somit höhenmoduliert (aufgrund der abwechselnd angeordneten Gräben 4 und Stege 5) und kann in der ersten Richtung P1 als Gitter mit einer Gitterperiode d bezeichnet werden, wobei in dem beschriebenen Ausführungsbeispiel das Gitter als Rechteck-Gitter ausgebildet ist.

Auf der höhenmodulierten Oberseite 6 des Trägers 3 ist eine als Farbfilter wirkende Mehrschichtstruktur 7 mit einer ersten Schicht 8, einer zweiten Schicht 9 sowie einer dritten Schicht 10, die in dieser Reihenfolge aufeinander liegen, ausgebildet. Die erste und dritte Schicht 8, 10 sind jeweils als 20 nm dicke, semitransparente Silberschicht ausgebildet (somit ist h1 = h3 = 20 nm). Die dazwischenliegende zweite Schicht ist als SiO₂-Schicht mit einer Schichtdicke von h2 = 150 nm und einer Brechzahl von n ≈ 1,5 gebildet.

Aufgrund der höhenmodulierten Oberseite 6 weist die Mehrschichtstruktur 7 erste Abschnitte 11, die in den Gräben 4 gebildet sind, sowie zweite Abschnitte 12, die auf den Stegen 5 gebildet sind, auf, die zueinander in einer Modulationsrichtung P2 senkrecht zur ersten Richtung P1 jeweils um die Grabentiefe t, die auch als Modulationstiefe bezeichnet werden kann, versetzt sind. In Draufsicht gesehen ist die Mehrschichtstruktur als Ganzes zusammenhängend. Gleiches gilt für die einzelnen Schichten 8, 9 und 10 der Mehrschichtstruktur 7.

Auf der Mehrschichtstruktur 7 ist eine transparente Schutzschicht 13 ausgebildet.

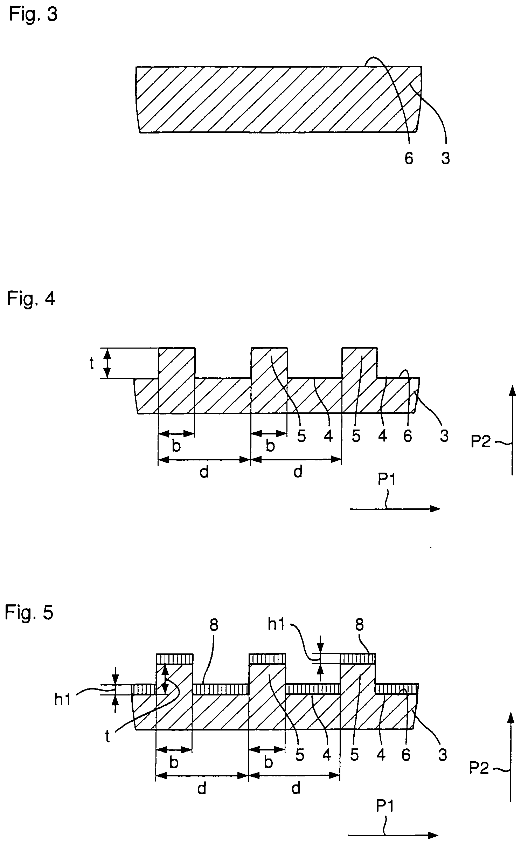

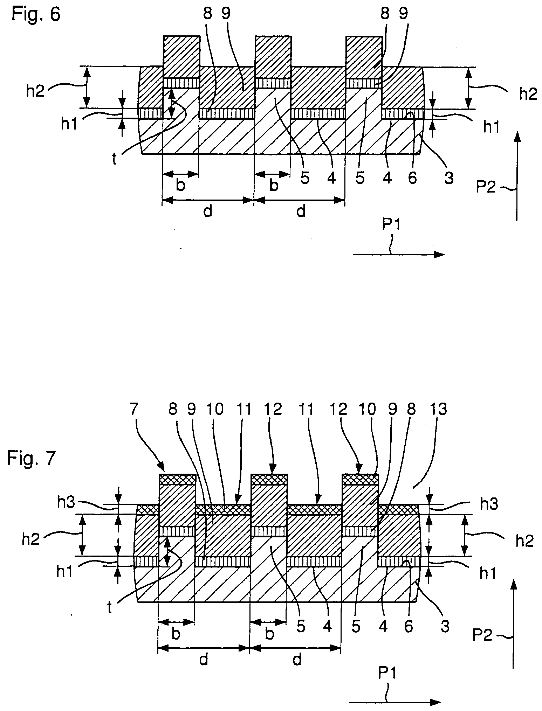

Die Herstellung des Sicherheitselementes 1 ist in den Figuren 3 - 7 schematisch dargestellt. Zunächst wird die Oberseite 6 des Trägers 3, der hier ein strahlungshärtender Lack ist (z.B. ein UV-Lack), durch Prägen höhenmoduliert (Figuren 3, 4). Die Lackschicht 3 kann z.B. auf einer nicht gezeigten, transparenten Trägerfolie (z.B. eine PET-Folie) vorgesehen sein.

Danach werden nacheinander die erste, zweite und dritte Schicht (Figuren 5 - 7) sowie die transparente Schutzschicht 13 (z.B. eine Lackschicht) aufgebracht, so dass man das Sicherheitselement 1 gemäß Figur 2 erhält.

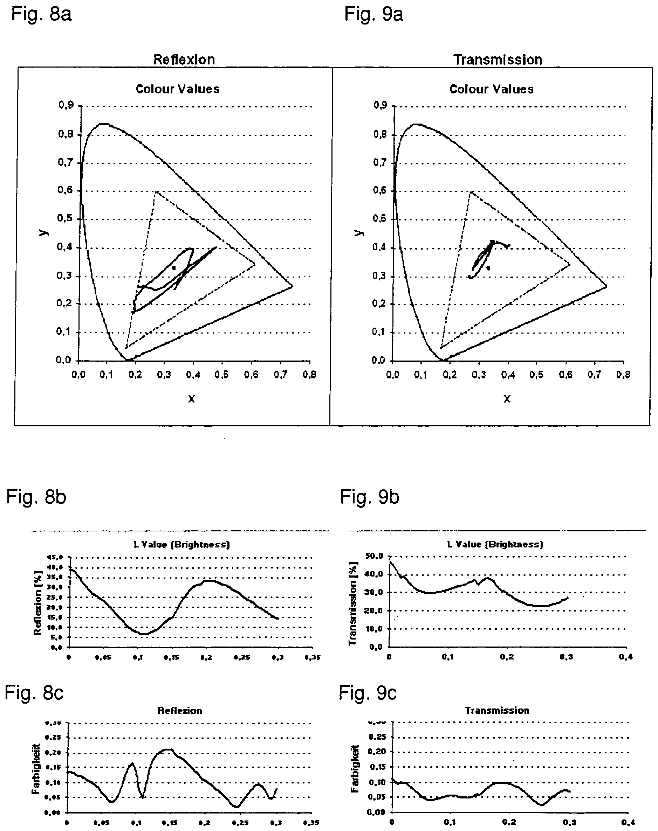

Aufgrund des beschriebenen Aufbaus kann die Farbfilterwirkung der höhenmodulierten Mehrschichtstruktur 7 sowohl in Reflexion als auch Transmission beobachtet werden. Es wurde dabei festgestellt, dass die Modulationstiefe t einen großen Einfluss auf die Filterwirkung hat. Man kann daher durch Wahl der Modulationstiefe t die Farbfilterwirkung festlegen. Um dies zu verdeutlichen, wird nachfolgend die Änderung der Farbfilterwirkung für Modulationstiefen t zwischen 0 und 300 nm in Verbindung mit Figuren 8a - 8c (für Reflexion) und Figuren 9a - 9c (für Transmission) jeweils für einen Einfallswinkel des Lichtes von 30° beschrieben.

In den Figuren 8a und 9a sind jeweils die darstellbaren Farben in der CIE-Normfarbtafel eingezeichnet. Der schwarze Punkt in den Figuren 8a und 9a bezeichnet den Weißpunkt. Die Figuren 8b und 9b zeigen den L-Wert des Lab-Farbraums in Abhängigkeit der Modulationstiefe t und die Figuren 8c und 9c zeigen die Farbigkeit in Abhängigkeit der Modulationstiefe t. Die Farbigkeit ist hier als Abstand des Farbwerts x, y vom Weißpunkt definiert.

Wie den Figuren 8a - 8c und 9a - 9c zu entnehmen ist, wird ein großer Bereich des Farbraums sowohl in Reflexion als auch in Transmission durchlaufen. Dabei liegen die Intensitäten (L-Werte im Lab-Farbraum) so, dass die Farben auch bei Tageslicht gut wahrnehmbar sind.

Das erfindungsgemäße Sicherheitselement 1 wirkt somit als Farbfilter (in Reflexion oder Transmission), der nur einen Teil des einfallenden weißen Lichtes reflektiert oder transmittiert. Bevorzugt ist dabei die Gitterperiode d < λ/n, wobei λ die größte Wellenlänge des vorbestimmten Wellenlängenbereiches, für den das Sicherheitselement 1 ausgelegt ist, und n den Brechungsindex des umgebenden Mediums bezeichnet. Das Sicherheitselement 1 ist insbesondere für sichtbares Licht (Wellenlängenbereich von 380 bis 780 nm) ausgelegt, so dass die vorliegende Gitterperiode d von 330 nm kleiner ist als als der Wert λ/n ≈ 520 nm für die größte Wellenlänge. Die Mehrschichtstruktur 7 kann daher auch als Subwellenlängengitter bezeichnet werden. Bei diesem Gitter tritt zwar im Blauen auch Beugung in der ersten Ordnung auf. Jedoch dominiert die Lichtbeugung der nullten Ordnung. Zudem ist der Beugungswinkel für die höheren Ordnungen des blauen Lichtes sehr steil und wird daher vom Beobachter kaum wahrgenommen.

Durch Variation der Modulationstiefe t können somit unterschiedliche Farben in Reflexion und/oder Transmission dargestellt werden. Durch eine laterale Variation der Modulationstiefe kann somit ein feinstrukturiertes, mehrfarbiges Motiv dargestellt werden. Es muß lediglich lokal die entsprechende Modulationstiefe eingestellt werden, die der gewünschten Farbe an diesem Ort entspricht. Bei dem so dargestellten Motiv kann es sich um Buchstaben, Zahlen, Texte, Bilder oder sonstige grafische Darstellungen handeln. Mit dem erfindungsgemäßen Sicherheitselement lassen sich somit sehr fein strukturierte mehrfarbige Motive erzeugen, die äußerst schwer zu kopieren sind.

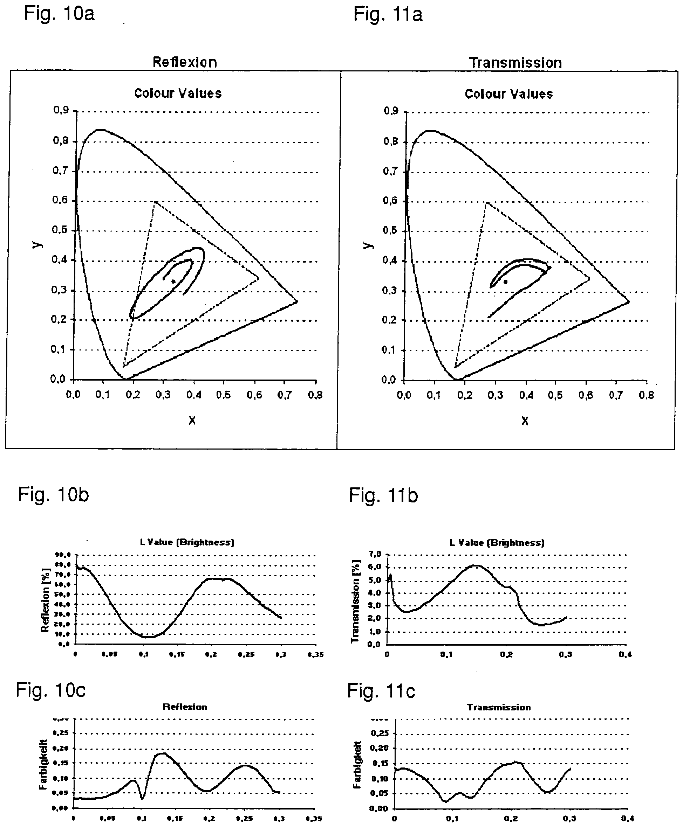

In einer weiteren Ausführungsform, die sich von der Ausführungsform von Figur 2 nur darin unterscheidet, dass die erste und dritte Schicht 8, 10 jeweils aus Aluminium mit einer Schichtdicke h1 = h3 = 10 nm und die zweite Schicht aus SiO₂ mit einer Schichtdicke h2 = 200 nm ausgebildet sind, kann ein etwas größerer Bereich des Farbraums in Reflexion abgedeckt werden, wie den Figuren 10a - 10c zu entnehmen ist. Figuren 10a - 10c sind die entsprechenden Darstellungen zu Figuren 8a - 8c.

Jedoch ist die Transmission selbst bei der gewählten Schichtdicke von 10 nm für h1 und h3 nicht mehr sehr ausgeprägt, wie den Figuren 11a - 11c, die die entsprechenden Figuren zu Figuren 9a - 9c sind, zu entnehmen ist. Eine Verringerung der Dicken h1 und h3 auf 5 nm würde die Transmission etwa um den Faktor vier erhöhen, jedoch würde sich dabei auch die Abdeckung des Farbraums in Transmission verringern.

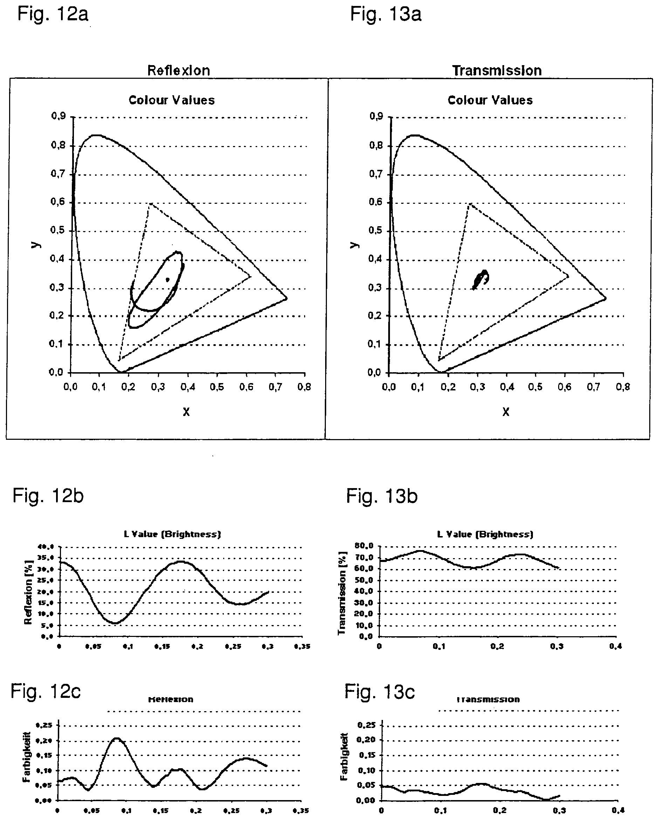

Die erste und dritte Schicht 8, 10 müssen nicht aus einem metallischen Material gebildet sein, sondern können auch aus einem halbmetallischen Material, wie etwa Silicium oder Germanium, oder aus dielektrischen Materialien, deren Brechzahl höher als die Brechzahl des dielektrischen Materials der zweiten Schicht 9 ist, gebildet sein. Beispielsweise kann im Unterschied zur Ausführungsform zu Figur 2 die erste und dritte Schicht 8, 10 aus ZnS gebildet sein, wobei h1 = 100 nm und h3 = 60 nm. Die dielektrische Schicht ist eine SiO₂-Schicht mit einer Dicke h2 = 80 nm. Die restlichen Abmessungen entsprechen denen bei der Ausführungsform von Figur 2. Bei einem Sicherheitselement 1 mit einem rein dielektrischen Schichtaufbau ist eine große Farbabdeckung bei Reflexion vorhanden (Figuren 12a - 12c). In Transmission sind die Farbeigenschaften jedoch nur schwach ausgeprägt, wie Figuren 13a - 13c zu entnehmen ist. Daher wird ein rein dielektrischer Schichtaufbau bevorzugt vor einem schwarzen Hintergrund betrachtet.

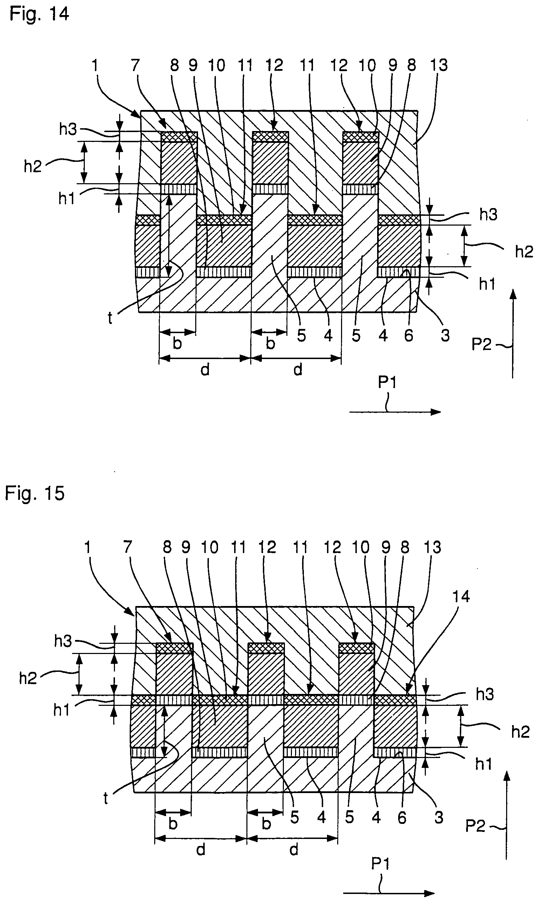

Bei den Darstellungen in Figuren 8 - 13 wurde jeweils die Modulationstiefe t zwischen 0 und 300 nm variiert. Dies führt dazu, dass neben dem in Figur 2 dargestellten Versatz der ersten und zweiten Abschnitte 11 und 12 in Modulationsrichtung P2 der Versatz auch so groß sein kann, dass die Unterseite der ersten Schicht 8 in den zweiten Abschnitten 12 oberhalb der Oberseite der dritten Schicht 10 in den ersten Abschnitten 11 liegt, wie im ersten erfindungsgemäßen Ausführungsbeispiel der Figur 14 dargestellt ist. In Draufsicht gesehen sind sowohl die Mehrschichtstruktur 7 als auch die einzelnen Schichten 8 bis 10 immer noch zusammenhängend.

Ein Sonderfall tritt auf, wenn die Modulationstiefe t so gewählt ist, dass sie gleich der Summe der Schichtdicken h1 und h2 entspricht. Dies führt dazu, dass die erste Schicht 8 der zweiten Abschnitte 12 sowie die dritte Schicht 10 der ersten Abschnitte 11 einen geschlossenen Film 14 bilden und die erste Schicht 8 in den ersten Abschnitten 11 unterhalb des geschlossenen Filmes 14 sowie die dritte Schicht 10 der zweiten Abschnitte 12 oberhalb des geschlossenen Filmes 14 jeweils ein Drahtgitter bilden, wie dies im zweiten Ausführungsbeispiel der Figur 15 dargestellt ist.

Der geschlossene Film 14 hat eine konstante Dicke, wenn h1 gleich h3 ist. Wenn h1 ungleich h3 ist, variiert die Dicke des Filmes periodisch (mit der Periode d).

Die Farbfiltereigenschaften des erfindungsgemäßen Sicherheitselementes 1 können durch verschiedene Effekte bedingt werden, wie z.B. die Wood-Anomalie, bei der ein Teil des sichtbaren Spektrums in die erste Ordnung gebeugt und daher in der nullten Beugungsordnung bei Reflexion oder Transmission fehlt. Dieser Effekt ist nahezu unabhängig von der Polarisation des Lichtes.

Ferner können durch Licht mit TM-Polarisation Oberflächenplasmon-Polaritonen angeregt werden, was zu einer selektiven Absorption bei verringerter Transmission führt.

Es können Plasmaresonanzen an den sehr dünnen Metallschichten 8, 10 auftreten, was zu einer selektiven Absorption und einer erhöhten Transmission führt. Die Resonanzwellenlänge hängt vom Metall ab und ist unabhängig von der Polarisation.

Des weiteren können Fabry-Perot Resonanzen zwischen den dünnen Metallschichten 8, 10 auftreten, wobei die Resonanzwellenlänge vom Abstand h2 der beiden Metallschichten 8, 10 abhängt.

Auch Hohlraumresonanzen in den Gittergräben 4 (bei TM-Polarisation) können auftreten, wobei die Resonanzwellenlänge von der Grabentiefe t abhängt.

Des weiteren können Resonanzen in TE-Polarisation auftreten, wobei die Resonanzwellenlänge abhängig ist von der Breite der Gittergräben 4.

Schließlich kann bei einem rein dielektrischen Aufbau der Mehrschichtstruktur 7 (drei dielektrische Schichten 8 - 10) eine Interferenz zwischen der niedrig brechenden Schicht 9 und den hoch brechenden dielektrischen Schichten 8, 10 vorliegen.

All diese Effekte können bei den beschriebenen Mehrschichtstrukturen 7 zur Farbgebung beitragen. Die wesentlichen Beiträge stammen jedoch von den Fabry-Perot Resonanzen zwischen den dünnen Metallschichten, wenn die erste und dritte Schicht 8, 10 aus Metall oder Halbmetall gebildet sind, bzw. von den Interferenzen zwischen der ersten und dritten Schicht 8, 10, wenn diese als dielektrische Schichten mit einer höheren Brechzahl als die dielektrische zweite Schicht 9 gebildet sind.

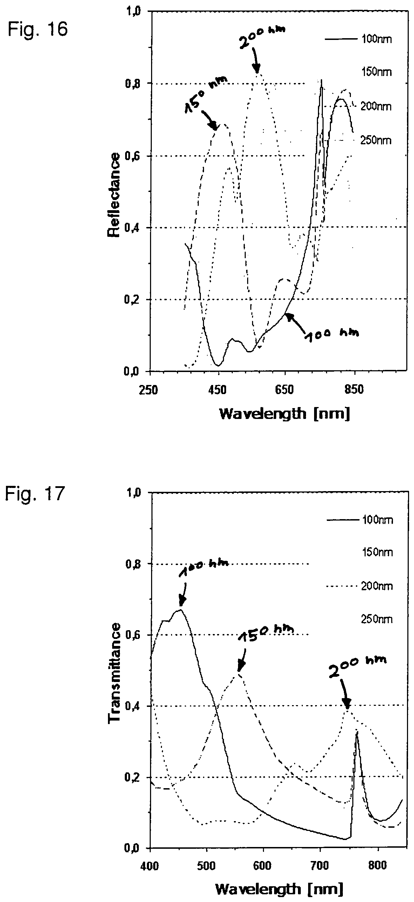

In Figuren 16 und 17 sind die Reflexions- und Transmissionsspektren für eine Mehrschichtstruktur 7 gezeigt, bei der die erste und dritte Schicht 8, 10 als Silberschicht mit einer Schichtdicke h1 = h3 = 20 nm ausgebildet ist, wobei die Modulationstiefe t 100, 150, 200 und 250 nm beträgt. Für jede dieser Modulationstiefen ist dabei die Schichtdicke h2 der dielektrischen zweiten Schicht 9, die eine SiO₂-Schicht ist, so gewählt, dass h1 + h2 = t erfüllt ist und somit der geschlossene Metallfilm 14 gemäß Figur 15 vorliegt. Die Werte für b und d betragen 130 nm und 330 nm. Ein Sicherheitselement 1 mit einer solchen Mehrschichtstruktur 7 wird nachfolgend auch als Sicherheitselement gemäß Variante 1 bezeichnet.

Aus den Spektren gemäß Figuren 16 und 17, die das Reflexions- bzw. Transmissionsverhalten für einen Einfallswinkel des Lichtes von 30° zeigen, ist ersichtlich, dass sich mit zunehmender Schichtdicke h2 bzw. mit zunehmender Modulationstiefe t die Resonanz in den langwelligen Bereich verschiebt.

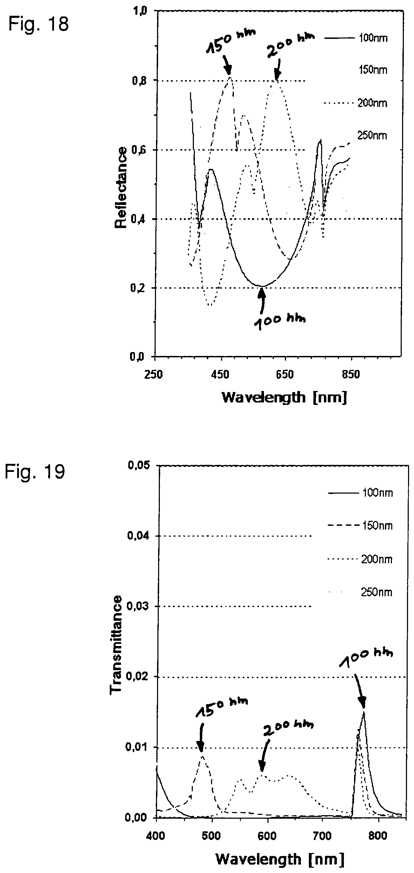

Das gleiche Verhalten zeigt sich gemäß Figuren 18 und 19, die in gleicher Weise wie in Figuren 16 und 17 die Reflexions- und Transmissionsspektren für einen Einfallswinkel des Lichtes von 30° bei einer Mehrschichtstruktur 7 zeigen, bei der die erste und dritte Schicht 8, 10 jeweils als Aluminiumschicht mit einer Dicke von 30 nm ausgebildet ist. Die zweite Schicht ist wiederum eine SiO₂-Schicht, deren Dicke 100, 150, 200, 250 nm beträgt. Auch hier wurde die Modulationstiefe t jeweils so gewählt, dass h1 + h2 = t gilt, so dass der geschlossene Film 14 vorliegt. Die Werte für b und d betragen 130 nm und 330 nm. Ein Sicherheitselement 1 mit einer solchen Mehrschichtstruktur 7 wird nachfolgend auch als Sicherheitselement gemäß Variante 2 bezeichnet.

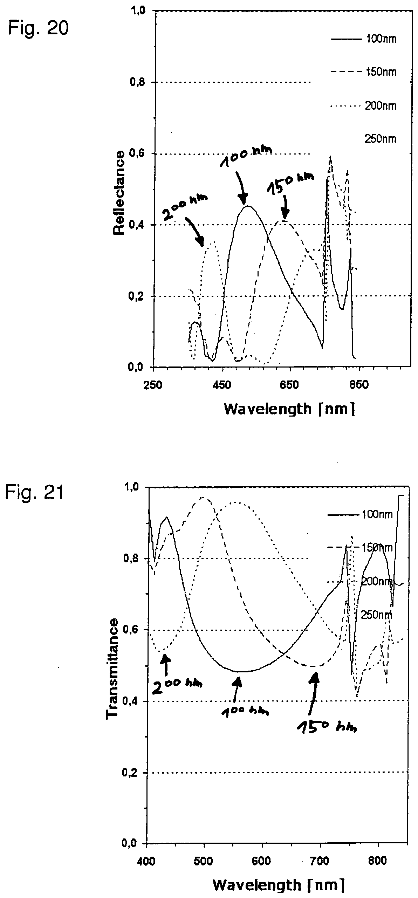

Auch für den Fall, dass die Mehrschichtstruktur 7 aus drei dielektrischen Schichten ausgebildet ist, ist ein gleiches Verhalten zu beobachten. Wie Figuren 20 und 21 zu entnehmen ist, ist bei einer Mehrschichtstruktur 7, bei der die erste und dritte Schicht jeweils als ZnS-Schicht mit einer Dicke von 70 nm ausgebildet und die zweite Schicht als SiO₂-Schicht ausgebildet ist, zu beobachten, dass sich die Resonanz mit zunehmender Dicke der zweiten Schicht bzw. mit zunehmender Modulationstiefe t in den langwelligen Bereich verschiebt. Auch in den Figuren 20 und 21 sind in gleicher Weise wie in Figuren 16 und 17 die Reflexions- und Transmissionsspektren für die Schichtdicken h2 der zweiten Schicht von 100, 150, 200 und 250 nm eingezeichnet, wobei auch hier wiederum die Modulationstiefe t jeweils so gewählt ist, dass h1 + h2 = t erfüllt ist. Die Werte für b und d betragen 130 nm und 330 nm. Ein Sicherheitselement 1 mit einer solchen Mehrschichtstruktur 7 wird nachfolgend auch als Sicherheitselement gemäß Variante 3 bezeichnet.

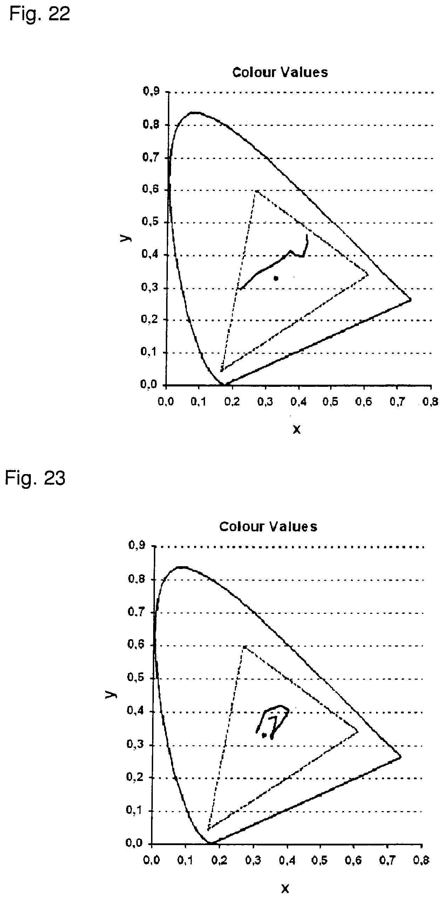

In Figur 22 ist die Winkelabhängigkeit der Farben bei Reflexion gemäß der Mehrschichtstruktur von Variante 1 mit h2 = 200 nm für den Einfallswinkel des Lichtes von 0 bis 45° dargestellt. In Figur 23 ist die gleiche Darstellung für die Mehrschichtstruktur gemäß Variante 2 mit h2 = 200 nm gezeigt. Aus diesen Darstellungen kann entnommen werden, dass selbst bei einer gleichmäßigen Ausleuchtung für den Winkelbereich von 0° bis 45° eine Farbfilterwirkung bei Reflexion auftritt. Der erfindungsgemäße Farbeffekt wird also durch eine diffuse oder konvergente Beleuchtung nicht egalisiert, sondern ist trotzdem deutlich sichtbar.

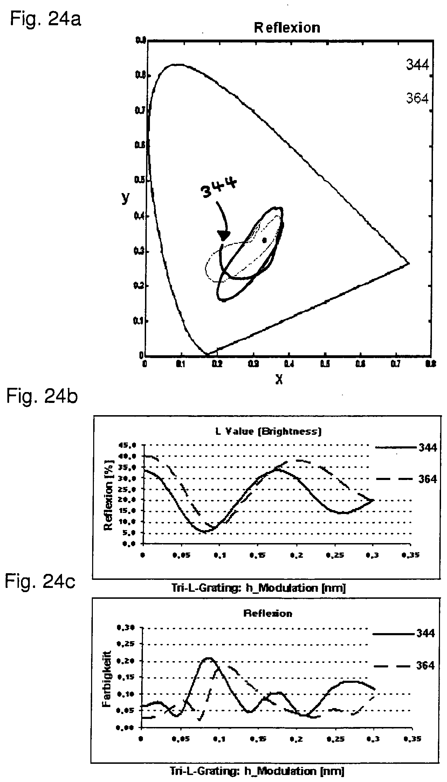

In Figuren 24a - 24c wird die Reflexion der Mehrschichtstruktur gemäß Variante 3 für die Einfallswinkel von 0° und 60° für Modulationstiefen t zwischen 0 und 300 nm gezeigt. Die Darstellung in Figuren 24a - 24c entspricht im wesentlichen der Darstellung von Figuren 8a - 8c. Aus dem Diagramm gemäß Figur 24c kann entnommen werden, dass für einen weiten Bereich der Modulationstiefe t dieselbe Farbe erzeugt wird. Es können somit geeignete Modulationstiefen t gewählt werden, bei denen die Farben in Reflexion eine sehr geringe Winkelabhängigkeit zeigen. In den Figuren 24a - 24c bezeichnen die Nummern "344" und "364" jeweils die Ergebnisse für einen Einfallswinkel von 30° bzw. 60°.

Zusätzlich können polarisierende Eigenschaften des Sicherheitselementes zur Echtheitserkennung genutzt werden. Die in den Figuren 16 - 21 gezeigten Resonanzen im Spektrum sind für TM- und TE-Polarisationen unterschiedlich ausgeprägt. Ein Teil der Resonanzen tritt nur für TM-Polarisation, ein anderer Teil nur für TE-Polarisation auf. Daher werden unterschiedliche Farben bei der Beleuchtung mit polarisiertem Licht oder bei der Betrachtung mit einem Polarisator abhängig von der Polarisationsrichtung wahrgenommen.

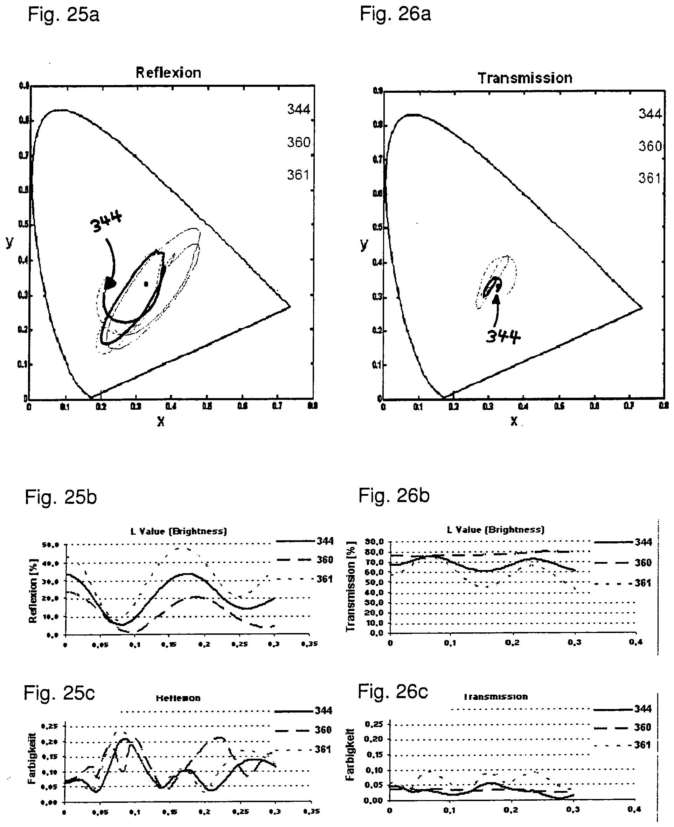

Die polarisationsabhängigen Farbeindrücke für die Mehrschichtstruktur 7 gemäß Variante 3 sind in Figuren 25a - 25c für Reflexion und in Figuren 26a - 26c für Transmission jeweils für einen Einfallswinkel des Lichtes von 30° dargestellt. Aus diesen Darstellungen lässt sich entnehmen, dass die Farbänderung beim Wechsel von TM- auf TE-Polarisation für die Modulationstiefen von t ungefähr 80 nm und t ungefähr 210 nm besonders ausgeprägt sind. In den Figuren 25a - 25c bezeichnet die Nummer "344" den Zustand ohne Polarisation und die Nummern "360" und "361" bezeichnen jeweils die Zustände TM-Polarisation bzw. TE-Polarisation.

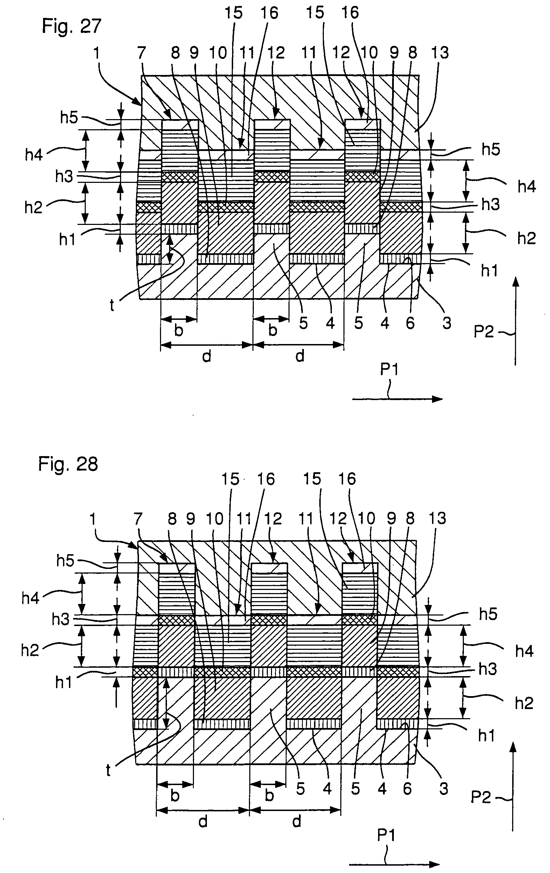

Natürlich kann die Mehrschichtstruktur 7 mehr als drei Schichten umfassen. In Figur 27 ist eine nicht unter die Erfindung fallende Mehrschichtstruktur 7 mit fünf Schichten dargestellt, die auch als Penta-Struktur 7 bezeichnet werden kann. Die zusätzliche vierte Schicht 15 im Vergleich zu der Ausführungsform von Figur 2 ist eine dielektrische Schicht, die hier aus dem gleichen Material wie die zweite Schicht 9 ausgebildet ist. Die zusätzliche fünfte Schicht 16 ist eine Metallschicht, die hier in gleicher Weise wie die erste und dritte Schicht 8, 10 jeweils aus Silber gebildet ist. Die Schichtdicken h1, h3 und h5 sind gleich und betragen 15 nm. Die Schichtdicken h2 und h4 sind ebenfalls gleich und betragen 100 nm, wobei als Material ZnS verwendet wurde. Die Werte für b und d sind 130 nm und 330 nm.

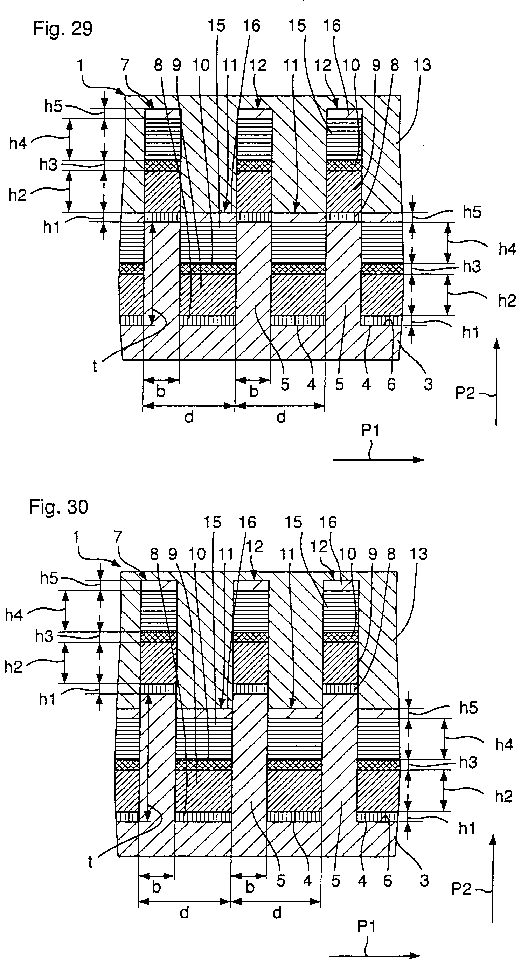

Wie den erfindungsgemäßen Figuren 28 bis 30 zu entnehmen ist, können in Abhängigkeit der Modulationstiefe t zwei (Figur 28) oder eine (Figur 29) durchgehende Metallschicht vorliegen. In Figur 30 ist ein Ausführungsbeispiel gezeigt, bei dem die Modulationstiefe t größer als die Schichtdicke (= h1 + h2 + h3 + h4 + h5) der Mehrschichtstruktur 7 ist.

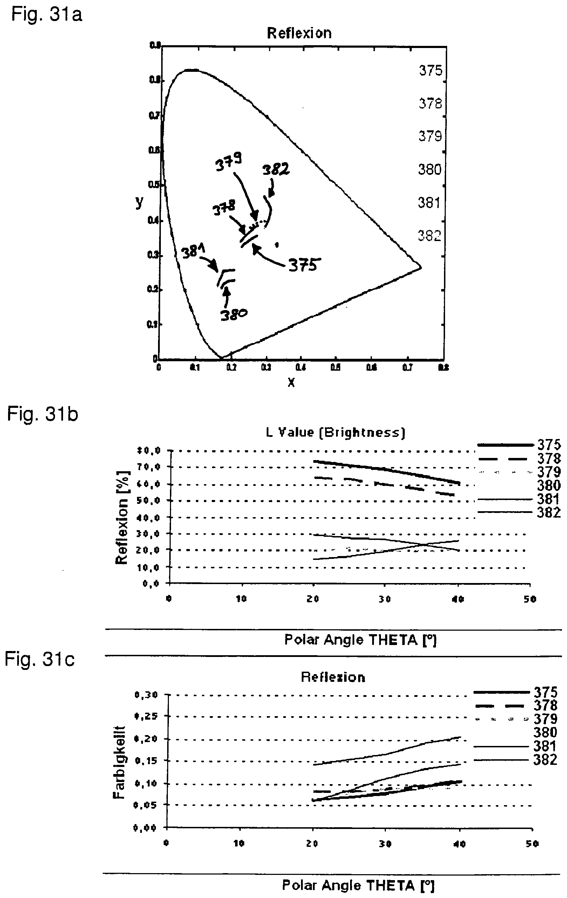

In Figuren 31a - 31c ist das Reflexionsverhalten der Penta-Struktur 7 für verschiedene Modulationstiefen t (0 nm, 15 nm, 40 nm, 115 nm, 130 nm und 230 nm) in Abhängigkeit des Einfallswinkels für den Bereich von 20° - 40° dargestellt. Verschiedene Modulationstiefen t zeigen somit unterschiedliche Farben in Reflexion. In den Figuren 31a - 31c bezeichnen die Nummern "375", "378", "379", "380", "381" und "382" jeweils die Modulationstiefen 0 nm, 15 nm, 40 nm, 115 nm, 130 nm und 230 nm.

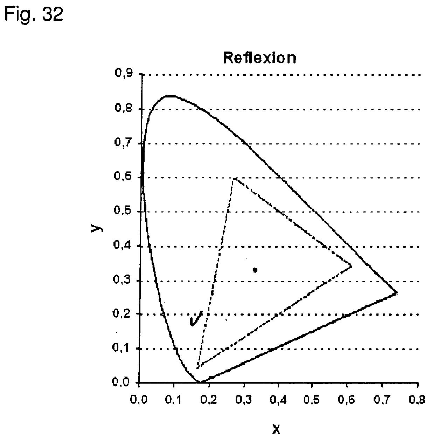

In Figur 32 ist in einer CIE-Normfarbtafel die Reflexion einer Penta-Struktur 7 gezeigt, bei der die Metallschichten 8, 10 und 16 jeweils aus Silber mit einer Dicke von 15 nm und die dielektrischen Schichten 9 und 15 aus TiO₂ mit einer Dicke von 70 nm gebildet sind. Die Modulationstiefe t beträgt 100 nm und die Werte für b und d sind 130 nm sowie 330 nm. Das Reflexionsverhalten ist in Figur 32 als Funktion des Einfallswinkels des Lichtes für den Bereich von 20° - 40° dargestellt. Durch einen solchen Aufbau lässt sich ein blauer Farbton erzeugen, der außerhalb des Farbdreiecks liegt, das Farben umschließt, die herkömmliche Bildschirme darstellen können.

Die Ausbildung der Mehrschichtstruktur als Penta-Struktur zeigt somit ausgeprägte Farben in Reflexion und Transmission. Für bestimmte Geometrien können sogar Farben mit größerer Sättigung (Abstand zum Weißpunkt) als mit Mehrschichtstrukturen 7, die lediglich aus drei Schichten aufgebaut sind, erzielt werden. So ist beispielsweise mit einer fünfschichtigen Mehrschichtstruktur 7, bei der als Metallschichten jeweils 15 nm dicke Silberschichten und als dielektrische Schichten jeweils 32 nm dicke ZnS-Schichten verwendet werden, die Darstellung einer kräftigen Goldfarbe möglich. Insbesondere ist es mit den Penta-Strukturen 7 möglich, Farben zu erzeugen, die außerhalb des Farbdreiecks liegen.

Bei der Ausbildung der Mehrschichtstruktur 7 mit fünf Schichten kann ein rein dielektrischer Schichtaufbau realisiert werden, bei dem abwechselnd hoch und niedrig brechende dielektrische Schichten aufeinander angeordnet werden.

Es ist jedoch anzumerken, dass bei dem dreischichtigen Aufbau der Mehrschichtstruktur 7 der abdeckbare Farbraum durch Variation der Modulationstiefe t tendenziell größer ist als bei fünfschichtigen Mehrschichtstrukturen 7. Ebenfalls ist natürlich die Herstellung einer Mehrschichtstruktur mit nur drei Schichten leichter als mit fünf Schichten.

Ferner ist bei der Mehrschichtstruktur 7 möglich, die Metallschichten bzw. die hoch brechenden dielektrischen Schichten 8, 10, 16 aus unterschiedlichen Materialien zu bilden. So kann z.B. die erste Schicht 8 eine 11 nm dicke Kupferschicht sein, die dielektrische Schicht eine SiO₂-Schicht mit einer Dicke von 380 nm und die dritte Schicht 10 eine 60 nm dicke Aluminiumschicht sein. Auch folgende Schichtfolgen sind möglich:
12 nm Ag/ 190 nm ZnS/ 60 nm Al
7 nm Cr/ 380 nm SiO₂/ 60 nm Al;
11 nm Cu/ 380 nm SiO₂/ 300 nm Al

Als Metalle können vorzugsweise Aluminium, Gold, Silber, Kupfer, Palladium, Chrom, Nickel und/oder Wolfram sowie deren Legierungen eingesetzt werden. Als Material für die dielektrischen Schichten kann z.B. ZnS, SiO₂, TiO₂, MgF₂ verwendet werden.

Das erfindungsgemäße Sicherheitselement 1 kann mit einer Mottenaugenstruktur oder einer sonstigen schwarzen, absorbierenden Struktur beispielsweise so kombiniert werden, dass es von dieser Struktur umgeben ist. Dies führt zu einem besonders guten Kontrast des durch das Sicherheitselement 1 dargestellten Motivs gegenüber dem schwarzen Hintergrund. Natürlich ist es auch möglich, den Träger 3 auf einer solchen schwarzen, absorbierenden Struktur auszubilden, so dass das gesamte Sicherheitselement 1 vor einem schwarzen Hintergrund positioniert ist. Damit wird ein sehr guter Kontrast bei der Reflexion erreicht. Es ist beispielsweise möglich, kegelförmige Nanostrukturen auszubilden, so dass die gewünschte schwarz absorbierende Wirkung erreicht wird.

Bei rein dielektrischen Mehrschichtstrukturen 7 wird der Vorteil erreicht, dass diese besonders schwer zu fälschen sind, da das Profil einer solchen Struktur noch schwerer als bei metallischen Strukturen ermittelt werden kann. So sind bei rein dielektrischen Strukturen Querschnittsaufnahmen mit einem Rasterelektronenmikroskop sehr schwierig herzustellen.

Ferner ist es möglich, in die dielektrische Schicht 9 und/oder 15 metallische Nanopartikel einzubringen (wie z.B. Ag-Nanopartikel). Dies führt zu veränderten Farben bei Reflexion und Transmission gegenüber einer Mehrschichtstruktur 7 mit gleichem Aufbau, jedoch ohne Nanopartikel. Die Nanopartikel können z.B. so ausgebildet sein, wie sie in der WO 2009/083151 A1 beschrieben sind.

Der Effekt der Nanopartikel ist besonders groß, wenn die Mehrschichtstruktur einen reinen dielektrischen Schichtaufbau aufweist, wie z.B. eine Mehrschichtstruktur mit ZnS-SiO₂-ZnS.

Weiterhin ist der Farbfiltereffekt auch für zweidimensional periodische Gitter vorhanden. Dabei kann die Periodizität der zweiten Dimensionrichtung auch schräg zur ersten Dimensionsrichtung verlaufen.

Die Mehrschichtstruktur 7 kann lateral sehr fein variiert werden, so dass sich die Farbe innerhalb von Mikrometern ändert. Daher eignet sich diese Struktur bevorzugt zur Farbgebung bei Mikrohohlspiegel- und/oder Mikrolinsenanordnungen. Insbesondere können mit den Mikrohohlspiegeln und/oder Mikrolinsen Vergrößerungsanordnungen verwirklicht werden, wie z.B. Modulo-Vergrößerungsanordnungen oder Moire-Vergrößerungsanordnungen. Diese Anordungen können farbige Motive bzw. Bilder in einer bis zu 1000 facher Vergrößerung noch in feinster Auflösung darstellen. Das Grundprinzip einer solchen Modulo-Vergrößerungsanordnung ist beispielsweise in der WO 2009/00528 A1 beschrieben. Das Grundprinzip einer Moiré-Vergrößerungsanordnung ist beispielsweise in der WO 2006/087138 A1 beschrieben.

Das erfindungsgemäße Sicherheitselement kann auch als Sicherheitsfaden 17 ausgebildet sein, wie in Figur 1 angedeutet ist. Der Sicherheitsfaden 17 ist bevorzugt so in die Banknote 2 integriert, dass er zumindest abschnittsweise von der Vorderseite und/oder der Rückseite der Banknote betrachtet werden kann.

### Bezugszeichenliste

- 1: Sicherheitselement
- 2: Banknote
- 3: Träger
- 4: Graben
- 5: Steg
- 6: Oberseite
- 7: Mehrschichtstruktur
- 8: erste Schicht
- 9: zweite Schicht
- 10: dritte Schicht
- 11: erste Abschnitte
- 12: zweite Abschnitte
- 13: Film
- 14: geschlossener Film
- 15: vierte Schicht
- 16: fünfte Schicht
- 17: Sicherheitsfaden
- t: Grabentiefe, Modulationstiefe
- b: Abstand
- P1: 1. Richtung
- P2: Modulationsrichtung
- d: Gitterperiode

## Patentansprüche

1. Sicherheitselement (1), in Form eines Sicherheitsfadens, Aufreißfadens, Sicherheitsbandes, Sicherheitsstreifens, Patches oder Etiketts, für Sicherheitspapiere, Wertdokumente oder dergleichen,
mit einem Träger (3), dessen Oberseite (6) höhenmoduliert ist, und mit einer als Farbfilter wirkenden Mehrschichtstruktur (7), die auf der höhenmodulierten Oberseite (6) ausgebildet und dadurch ebenfalls höhenmoduliert ist, und die eine erste Schicht (8), eine darauf gebildete zweite Schicht (9) aus dielektrischem Material sowie eine auf der zweiten Schicht (9) ausgebildete dritte Schicht (10) umfasst,
wobei die dritte Schicht (10) aus einem metallischen oder halbmetallischen Material ausgebildet ist, und
wobei das Sicherheitselement (1) für den sichtbaren Bereich ausgelegt ist, wobei die Höhenmodulation der Oberseite (6) sowie der Mehrschichtstruktur (7) in einer ersten Richtung periodisch ist und die Gitterperiode kleiner ist als die größte Wellenlänge des Bereiches der elektromagnetischen Strahlung, für den das Sicherheitselement (1) ausgelegt ist, nämlich die Gitterperiode kleiner als 400 nm ist, **dadurch gekennzeichnet, dass**
die erste Schicht (8) aus einem metallischen oder halbmetallischen Material ausgebildet ist, und
durch eine laterale Variation der Mehrschichtstruktur (7) ein mehrfarbiges Motiv dargestellt wird, und
für eine Modulationstiefe t, eine Höhe h1 der ersten Schicht (8) und eine Höhe h2 der zweiten Schicht (9), zumindest teilweise t >= h1+h2 gilt.

2. Sicherheitselement (1) nach Anspruch 1, bei dem die Höhenmodulation der Oberseite (6) sowie der Mehrschichtstruktur (7) zusätzlich noch in einer zweiten Richtung periodisch ist.

3. Sicherheitselement (1) nach einem der Ansprüche 1 oder 2, bei dem das Gitterprofil rechteckig oder Rechteck-ähnlich ist.

4. Sicherheitselement (1) nach einem der Ansprüche 1 bis 3, bei dem die Gitterperiode (d) lateral variiert ist.

5. Sicherheitselement (1) nach einem der Ansprüche 1 bis 4, bei dem das Gitterprofil der Höhenmodulation lateral variiert ist.

6. Sicherheitselement (1) nach einem der obigen Ansprüche, bei dem in der zweiten Schicht (9) metallische Nanopartikel eingebracht sind.

7. Sicherheitselement (1) nach Anspruch 6, bei dem die Verteilung der Nanopartikel lateral variiert ist, um die Farbfilterwirkung der Mehrschichtstruktur (7) lateral zu variieren.

8. Sicherheitselement (1) nach einem der obigen Ansprüche, bei dem die Modulationstiefe der höhenmodulierten Mehrschichtstruktur lateral variiert ist.

9. Sicherheitselement (1) nach Anspruch 8, wobei teilweise oder insgesamt in der Mehrschichtstruktur t = h1+h2 gilt.

10. Sicherheitselement (1) nach Anspruch 8 oder 9, wobei Abschnitte der ersten Schicht (8) und Abschnitte der dritten Schicht (10) eine durchgehende Schicht bilden.

11. Sicherheitselement (1) nach einem der obigen Ansprüche, bei dem die Schichtdicke der zweiten Schicht (9) lateral variiert ist.

12. Sicherheitselement (1) nach einem der obigen Ansprüche, bei dem die Mehrschichtstruktur (7), in Draufsicht gesehen, zusammenhängend ist.

13. Sicherheitselement (1) nach einem der obigen Ansprüche, bei dem die Mehrschichtstruktur (7) eine vierte und fünfte Schicht (15, 16) aufweist, wobei die vierte Schicht (15) auf der dritten Schicht (10) gebildet und aus einem dielektrischen Material ausgebildet ist und die fünfte Schicht (16) auf der vierten Schicht (15) gebildet und in gleicher Weise wie die erste und dritte Schicht (8, 10) aus einem metallischen oder halbmetallischen Material ausgebildet ist.

14. Wertdokument mit einem Sicherheitselement nach einem der obigen Ansprüche.

15. Herstellungsverfahren eines Sicherheitselementes für Sicherheitspapiere, Wertdokumente oder dergleichen nach einem der Ansprüche 1 bis 12, bei dem
die Oberseite eines Trägers höhenmoduliert wird,
auf die höhenmodulierte Oberseite in dieser Reihenfolge eine erste Schicht, eine zweite Schicht aus dielektrischem Material und eine dritte Schicht als Mehrschichtstruktur aufgebracht wird, die dadurch ebenfalls höhenmoduliert ist,
wobei für die erste und dritte Schicht jeweils ein metallisches oder halbmetallisches Material verwendet wird.

## Claims

1. A security element (1), in the form of a security thread, tear thread, security band, security strip, patch or label, for security papers, value documents or the like,
having a carrier (3) whose upper side (6) is height modulated, and having a multilayer structure acting as a color filter (7) which is configured on the height-modulated upper side (6) and is therefore likewise height modulated, and which comprises a first layer (8), a second layer formed thereon (9) from a dielectric material as well as a third layer (10) configured on the second layer (9),
wherein the third layer is configured from a metallic or semi-metallic material and
wherein the security element (1) is designed for the visible region,
wherein the height modulation of the upper side (6) as well as of the multilayer structure (7) is periodic in a first direction and the grid period is smaller than the largest wavelength of the region of the electromagnetic radiation for which the security element (1) is designed, namely the grid period is smaller than 400 nm, **characterized in that**
the first layer (8) is formed from a metallic or semi-metallic material, and a multicolored motif is represented by a lateral variation of the multilayer structure (7), and
for a modulation depth t, a height h1 of the first layer (8) and a height h2 of the second layer (9) there holds at least partly t >= h1+h2.

2. The security element (1) according to claim 1, in which the height modulation of the upper side (6) as well as of the multilayer structure (7) is additionally periodic in a second direction.

3. The security element (1) according to any of claims 1 or 2, in which the grid profile is rectangular or rectangular-like.

4. The security element (1) according to any of claims 1 to 3, in which the grid period (d) is varied laterally.

5. The security element (1) according to any of claims 1 to 4, in which the grid period of the height modulation is varied laterally.

6. The security element (1) according to any of the above claims, in which metallic nanoparticles are incorporated in the second layer (9).

7. The security element (1) according to claim 6, in which the distribution of the nanoparticles is varied laterally to laterally vary the color filter effect of the multilayer structure (7).

8. The security element (1) according to any of the above claims, in which the modulation depth of the height-modulated multilayer structure is varied laterally.

9. The security element (1) according to claim 8, wherein there holds partly or altogether in the multilayer structure t = h1+h2.

10. The security element (1) according to claim 8 or 9, wherein portions of the first layer (8) and portions of the third layer (10) form a continuous layer.

11. The security element (1) according to any of the above claims, in which the layer thickness of the second layer (9) is varied laterally.

12. The security element (1) according to any of the above claims, in which the multilayer structure (7), seen in plan view, is contiguous.

13. The security element (1) according to any of the above claims, in which the multilayer structure (7) has a fourth and fifth layer (15,16), wherein the fourth layer (15) is formed on the third layer (10) and is configured from a dielectric material, and the fifth layer (16) is formed on the fourth layer (15) and is configured in the same manner as the first and third layer (8, 10) from a metallic or semi-metallic material.

14. A value document having a security element according to any of the above claims.

15. A manufacturing method for a security element for security papers, value documents or the like, according to any of claims 1 to 12, in which
the upper side of a carrier is height modulated,
onto the height-modulated upper side there are applied in this order a first layer, a second layer of dielectric material and a third layer as a multilayer structure which is therefore likewise height modulated,
wherein for the first and third layer respectively a metallic or semi-metallic material is employed.

## Revendications

1. Élément de sécurité (1) sous forme d'un fil de sécurité, d'une bandelette d'arrachage, d'une bande de sécurité, d'un ruban de sécurité, d'un patch ou d'une étiquette, pour papiers de sécurité, documents de valeur ou objets similaires,
ayant un support (3) dont la face de dessus (6) est modulée en hauteur et ayant une structure multicouche (7) à effet de filtre de couleur étant réalisée sur la face de dessus (6) modulée en hauteur et étant ainsi elle aussi modulée en hauteur, laquelle comprend une première couche (8), une deuxième couche (9) en matériau diélectrique constituée sur cette dernière, ainsi qu'une troisième couche (10) réalisée sur la deuxième couche (9),
cependant que la troisième couche (10) est réalisée à partir d'un matériau métallique ou semi-métallique, et
cependant que l'élément de sécurité (1) est conçu pour la zone visible,
cependant que la modulation en hauteur de la face de dessus (6) ainsi que de la structure multicouche (7) est périodique dans une première direction et que la période de grille est inférieure à la plus grande longueur d'onde du domaine du rayonnement électromagnétique pour lequel l'élément de sécurité (1) est conçu, à savoir que la période de grille est inférieure à 400 nm, **caractérisé en ce que**
la première couche (8) est réalisée à partir d'un matériau métallique ou semi-métallique, et que, par une variation latérale de la structure multicouche (7), un motif multicolore est représenté, et que, pour une profondeur de modulation t, une hauteur h1 de la première couche (8) et une hauteur h2 de la deuxième couche (9), il est établi qu'au moins partiellement t>= h1+h2.

2. Élément de sécurité (1) selon la revendication 1, dans lequel la modulation en hauteur de la face de dessus (6) ainsi que de la structure multicouche (7) est en plus périodique dans une deuxième direction.

3. Élément de sécurité (1) selon la revendication 1 ou 2, dans lequel le profil de grille est rectangulaire ou s'apparente à un rectangle.

4. Élément de sécurité (1) selon une des revendications de 1 à 3, dans lequel la période de grille (d) est configurée de manière à varier latéralement.

5. Élément de sécurité (1) selon une des revendications de 1 à 4, dans lequel le profil de grille de la modulation en hauteur est configuré de manière à varier latéralement.

6. Élément de sécurité (1) selon une des revendications précédentes, dans lequel, dans la deuxième couche (9), des nanoparticules métalliques sont incorporées.

7. Élément de sécurité (1) selon la revendication 6, dans lequel la répartition des nanoparticules est configurée de manière à varier latéralement afin de faire varier latéralement l'effet de filtre de couleur de la structure multicouche (7).

8. Élément de sécurité (1) selon une des revendications précédentes, dans lequel la profondeur de modulation de la structure multicouche modulée en hauteur est configurée de manière à varier latéralement.

9. Élément de sécurité (1) selon la revendication 8, dans lequel il est établi que, dans la structure multicouche, partiellement ou entièrement t = h1+h2.

10. Élément de sécurité (1) selon la revendication 8 ou 9, cependant que des sections de la première couche (8) et des sections de la troisième couche (10) constituent une couche en continu.

11. Élément de sécurité (1) selon une des revendications précédentes, dans lequel la profondeur de couche de la deuxième couche (9) est configurée de manière à varier latéralement.

12. Élément de sécurité (1) selon une des revendications précédentes, dans lequel la structure multicouche (7), en vue de dessus, est d'un seul tenant.

13. Élément de sécurité (1) selon une des revendications précédentes, dans lequel la structure multicouche (7) comporte une quatrième et une cinquième couche (15, 16), cependant que la quatrième couche (15) est constituée sur la troisième couche (10) et est réalisée en un matériau diélectrique, et que la cinquième couche (16) est constituée sur la quatrième couche (15) et est, de la même manière que la première et la troisième couche (8, 10), réalisée en un matériau métallique ou semi-métallique.

14. Document de valeur comportant un élément de sécurité selon une des revendications précédentes.

15. Procédé de fabrication d'un élément de sécurité selon une des revendications de 1 à 12 pour papiers de sécurité, documents de valeur ou objets similaires,
dans lequel
la face de dessus d'un support est modulée en hauteur,
sur la face de dessus modulée en hauteur, dans cet ordre, une première couche, une deuxième couche en matériau diélectrique et une troisième couche en tant que structure multicouche est appliquée, cette dernière étant ainsi elle aussi modulée en hauteur,
cependant que, pour la première et la troisième couche, respectivement un matériau métallique ou semi-métallique est utilisé.
